# EUROPEAN PATENT SPECIFICATION

(11) **EP 1 155 610 B1**
(45) Date of publication and mention of the grant of the patent: **29.11.2006**
(21) Application number: 01203443.5
(22) Date of filing: 03.03.1997
(51) Int. Cl.: A01J 5/01, G01F 1/64, G01F 1/708

(54) **A Quantity meter and an implement for milking animals comprising such a meter**
Mengenmesser und damit ausgerüstete Vorrichtung zum Melken von Tieren
Dispositif de mesure de quantité et dispositif de traite d'animaux muni d'un tel appareil de mesure

(30) Priority: 13.03.1996 NL 1002600
(43) Date of publication of application: 21.11.2001
(62) Divisional of application: 97200609.2
(73) Proprietor: MAASLAND N.V., 3147 PA Maassluis (NL)
(72) Inventor: van den Berg, Karel, 2971 BR Bleskensgraaf (NL)
(74) Representative: Corten, Maurice Jean F.M.

(56) References cited:
- EP-A- 0 323 182
- FR-A- 996 249
- GB-A- 2 124 877
- US-A- 5 245 946
- US-A- 5 394 831

## Description

The present invention relates to an assembly as described in the preamble of claim 1, the assembly comprising a quantity meter.

Such a quantity meter is known, e.g. from US-A-5,245,946.

It is an object of the invention to improve the above-described quantity meter.

According to the invention this is achieved by the features as defined in claim 1.

From US-A-5,394,831 a milk flow sensor is known per se comprising electrodes separated by a tube-like element made of an electrically non-conductive material. The sensor only detects a decrease in resistance to measure milk flow.

GB-A-2,124,877 discloses tube-like elements to measure conductance and to monitor milking. A further tube-like element is not foreseen.

According to the invention, there can be obtained a simple and reliable quantity meter when the latter comprises two electrically conductive elements, provided in the line at a fixed measuring distance from each other, which are connected to an electronic circuit, whereby the diameter of the line, at least across the measuring distance, is such that during flowing through of the liquid the volume of the line across the measuring distance is completely filled for some time, and whereby furthermore in the electronic circuit the quantity (V) of liquid flowed through is determined on the basis of the electric conductivity (G(t)) of the liquid measured therein, dimensioning parameters of the quantity meter and the rate of flow (v) of the liquid. In particular, the electronic circuit may comprise a microprocessor, in which the length of the interval of time (Δt), during which a quantity of liquid to be measured has flowed through the line, is at least approximately determined on the basis of the electric conductivity (G(t)), and in which the quantity (V) of liquid flowed through is at least approximately determined by the relation V = a*v*Δt, whereby (a) represents the size of the surface of the cross-section of the line between the electrically conductive elements, and the value of the rate of flow (v) is ascertained by means of calibration. In the microprocessor there can be determined more in detail the absolute conductivity (G_{abs}), ascertained in the time when the space in the line between the measuring points is completely filled with liquid, as well as a threshold value (α*G_{abs}) depending thereon, whereafter the size of the surface defined by the function (G(t)) defining the electric conductivity is calculated, insofar as the function values exceed the threshold value (α*G_{abs}), whereby the difference (G_{abs} - α*G_{abs}) between the absolute conductivity (G_{abs}) and the threshold value (α*G_{abs}) is standardized at a constant value, e.g. "1", said surface defining the value of the interval of time (Δt). In order to obtain a rate of flow (v) as constant as possible of the liquid by means of the quantity meter, the latter is connected to a buffer reservoir, while there is provided a circulation line which, at one end, is connected to said buffer reservoir at the upper side thereof or near thereto and, at the other end, debouches into the discharge line of the quantity meter. In the microprocessor the rate of flow of the liquid can be determined by adjusting a constant value obtained by means of calibration by a factor depending on the quantity of liquid to flow through, which quantity of liquid is present in the buffer reservoir, and the angle through which the quantity meter is connected to the buffer reservoir, which factor is obtained, by means of calibration, for a number of quantity values in the buffer reservoir and for a determined angle value.

For determining the absolute conductivity (G_{abs}) the diameter of the line, at least across the measuring distance, is such that during flowing through of the liquid the volume of the line at least across the measuring distance is completely filled for some time. In view thereof and certainly when small quantities of liquid flow consecutively pulsationwise through the line, it is advantageous when the line comprises a narrowing and the electrically conductive elements are disposed in this narrowing. When the liquid flows pulsationwise through the line, there can be determined in the microprocessor of each of these pulsations the quantity (V) and on the basis thereof, by summation, the total quantity (Vₜₒₜ).

According to a further aspect of the invention, the quantity meter as described in the foregoing can be applied in an implement for milking animals, such as cows. In that case not only the electric conductivity of the milk of the various animals will differ, but the electric conductivity of the milk of one and the same animal may also be different at consecutive milking runs, e.g. because a latent mastitis has occurred. Even during milking an animal, said electric conductivity may change somewhat in value, which occurs e.g. with foremilk, which has in general an electric conductivity deviating from the milk flow to be obtained later. Moreover, during milking, the milk flow is obtained pulsationwise, more in particular depending on the pulsation frequency at which milking takes place. By using the above-described quantity meter, it will be possible to take all these particular circumstances into account.

In accordance with the invention, the implement for milking animals will be provided with teat cups capable of being connected to the teats of the animals to be milked and a milk tank for collecting the milk obtained via the teat cups, whereby in a line between one or more teat cups and the milk tank there is included a buffer reservoir to which there is connected a quantity meter of the above-described type, while there is furthermore provided a circulation line which, at one end, is connected to said buffer reservoir at the upper side thereof or near thereto and, at the other end, debouches into the discharge line of the quantity meter. By disposing between each teat cup and the milk tank such a buffer reservoir with the quantity meter connected thereto, it will be possible to determine the quantity of milk obtained from the separate udder quarters of the animal.

The application of a quantity meter of the above-described type in an implement for milking animals is particularly important when said implement comprises a milking robot for automatically cleaning the teats, automatically connecting the teat cups to these teats, automatically milking the animal and automatically disconnecting the teat cups from the teats.

For a better understanding of the invention and to show how the same may be carried into effect, reference will now be made, by way of example, to the accompanying drawings, in which:
Figure 1 shows schematically an implement for milking animals, provided with a quantity meter in accordance with the invention;

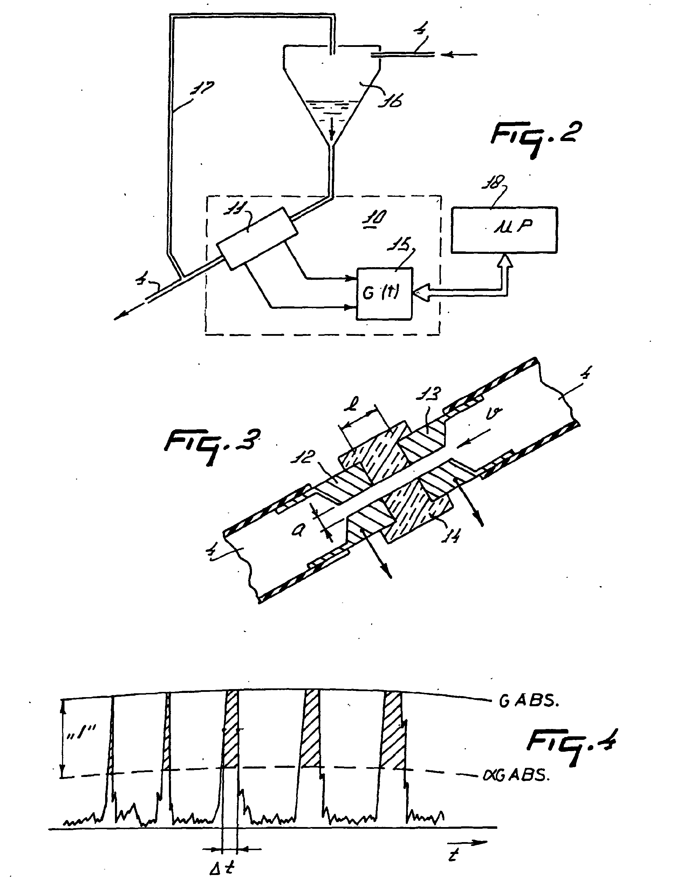

Figure 2 shows an embodiment of the quantity meter according to the invention;
Figure 3 shows a detail of said quantity meter, and
Figure 4 shows a diagram with the aid of which the function of the quantity meter is explained.

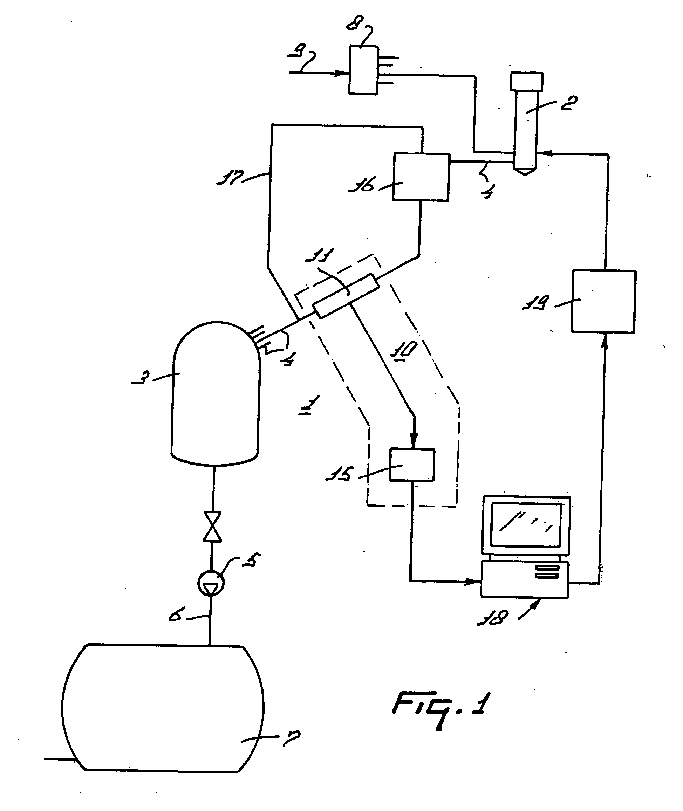

In Figure 1 there is represented a milking installation 1 for an implement for automatically milking an animal, while, for the sake of simplicity, there is indicated only one teat cup 2. Furthermore, there is provided a buffer vessel constituted by a milk glass 3. The milk yielded per udder quarter by means of the teat cups 2 is supplied to the milk glass 3 via a separate milk line 4. From the milk glass 3 the milk is supplied, by means of a pump 5, via a milk discharge line 6, to a milk tank 7. Moreover, the milking installation comprises, insofar as is important for the present invention, a pulsation system 8 for the four teat cups 2. The vacuum line 9 for the pulsation system 8 is connected to a vacuum pump including a balance tank.

The quantity meter 10 according to the invention is included in the milk line 4. In this case the quantity meter comprises a passage element 11, composed of two electrically conductive elements 12 and 13, each constituted by a tube-like element, which are kept at a fixed mutual distance 1 from each other by means of a further tube-like element 14 made of an electrically non-conductive material and having an internal diameter which equals that of the adjacent parts of the two electrically conductive tube-like elements 12 and 13. Said diameter has a cross-sectional surface a, so that the volume in the passage element 11 between the two electrically conductive elements 12 and 13 has the value a*1. Said volume has to be such that, when a liquid is flowing through, the volume of the line across the measuring distance is completely filled for some time. The electrically conductive elements 12 and 13 are connected to an electronic circuit 15, in which the electric conductivity (G(t)) of the liquid flowing through the passage element 11 is determined. For measuring the quantity it is important that at least for some time the electric conductivity of a defined volume is determined. This value for the electric conductivity is indicated by G_{abs}. When the quantity of liquid flowing through the passage element 11 is too small or flows through pulsationwise, it may be necessary to keep the volume a*l relatively small. As shown in Figure 3, in the embodiment represented therein there is provided in the passage element 11 a narrowing keeping the volume a*l small.

Besides the passage element 11 there is included a buffer reservoir 16 in the milk line 4. Said buffer reservoir is provided in order to ensure that the milk flow passing through the passage element 11 is as stationary as possible, which is important when the liquid is supplied irregularly or pulsationwise. For that reason, in the present embodiment, the buffer reservoir 16 is funnel-shaped and the liquid is supplied at the upper side thereof in such a way that it is guided downwards along the funnel wall. If required, in the lower part of the buffer reservoir 16 there may be arranged an extra guide element in order to influence a stationary course of the flow of liquid in a positive manner. To that end there is furthermore provided a circulation line 17 which, at one end, is connected to said buffer reservoir at the upper side thereof or near thereto and, at the other end, debouches into the discharge line of the quantity meter 10, i.e. into the part of the milk line 4 that is connected to the exit of the passage element 11. Because of this the difference in pressure across the quantity meter is mainly limited to the pressure exerted by the quantity of liquid in the buffer reservoir 16. Furthermore, the quantity meter is connected to the buffer reservoir 16 through a certain angle which, in the present embodiment, lies between 20° and 50°. The rate of flow (v) of the liquid through the passage element 11 is determined by correcting a constant value obtained by means of calibration by a factor depending on the quantity of liquid to flow through, which quantity is present in the buffer reservoir 16, and the angle through which the quantity meter, in particular the passage element 11, is connected to the buffer reservoir 16. This correction factor can be obtained, by means of calibration, for various quantities of liquid present in the buffer reservoir and for a determined angle value. By storing said constant value together with the correction factor in the memory of a microprocessor 18 or an other type of computer, the rate of flow (v) of the liquid, required for the determination of the quantity of liquid to flow through, depending on a supposed or, which is better of course, measured liquid level in the buffer reservoir 16, will be known.

In Figure 4 the pattern of the electric conductivity G(t) in the time t is shown, i.e. in the situation that the milk yielded via a teat cup from an udder quarter of a cow is supplied pulsationwise to the quantity meter 10. The frequency at which the milk is supplied thereto is determined by means of the pulsation system 8. In this figure the maximum conductivity, ascertained in the intervals of time when the volume a*1 is completely filled, is indicated by G_{abs}. The value of G_{abs} varies somewhat in the course of a milking run; moreover, this value is different for each cow. Because, after the milk has passed through the volume a*l, there will always remain a thin film of milk, there is measured almost permanently a conductivity characterized by background noise. When there is really a relevant quantity of milk in the volume a*l, then there is measured a conductivity above a fixed threshold value α*G_{abs}; in the present application α appears to be in the order of 0.3 to 0.4. It is preferable to choose a threshold value depending on G_{abs} instead of a constant threshold value. The difference G_{abs-}α*G_{abs} can then be standardized at a constant value, e.g. "1", because the quantity measurement must not depend on differences in the electric conductivity of the milk of different animals. By measuring the conductivity, insofar as the latter exceeds the threshold value, at a relatively high frequency, in the computer the surface defined by the function G(t) can be calculated, insofar as the function values exceed the threshold value, which means, because of the applied standardization of the value G_{abs} - α*G_{abs}, that there can be determined an average value Δt, i.e. the time when a milk pulsation flows through the passage element 11. For such a milk pulsation it applies that the latter represents a quantity of milk V = a*v*Δt. When for each of these liquid pulsations the quantity (V) has been determined, on the basis thereof the total quantity Vₜₒₜ can be calculated by summation.

The above-described quantity meter 10 can in particular be applied in an implement for automatically milking animals, such as cows, which implement comprises a milking robot 19, controlled by the computer 18, for automatically connecting teat cups to the teats of an animal, respectively disconnecting same therefrom. Especially in such an implement, in the absence of permanent human supervision, it is important to have a reliable quantity meter at one's disposal. The quantity of milk obtained from the separate quarters can continually be updated, so that there is realized at the same time a regular control of the condition of health of the udder.

The invention is by no means restricted to the embodiment shown, but also relates to all kinds of alternatives, in particular those indicated in the introduction of the description, of course, falling within the scope of the following claims.

## Claims

1. Assembly of a line and a quantity meter for determining the quantity of liquid flowing through the line, said quantity meter comprising two electrically conductive elements, provided in the line at a fixed measuring distance from each other, which are connected to an electronic circuit, whereby the diameter of the line, at least across the measuring distance, is such that during flowing through of the liquid the volume of the line across the measuring distance is completely filled for some time, and whereby furthermore in the electronic circuit the quantity V of liquid flowed through is determinable on the basis of the electric conductivity G(t) of the liquid measured therein, dimensioning parameters of the quantity meter and the rate of flow v of the liquid, **characterized in that** each of the electrically conductive elements is constituted by a tube-like element, which tube-like elements are both kept at a fixed mutual distance 1 from each other by means of a further tube-like element made of an electrically non-conductive material and having an internal diameter which equals that of the adjacent parts of the two electrically conductive tube-like elements.

2. An assembly as claimed in claim 1, **characterized in that** the electronic circuit comprises a microprocessor, in which the length of the interval of time Δt, during which a quantity of liquid to be measured has flowed through the line, is at least approximately determinable on the basis of the electric conductivity G(t), and in which the quantity V of liquid flowed through is at least approximately determinable by the relation V = a*v*Δt, whereby a represents the size of the surface of the cross-section of the line between the electrically conductive elements, and the value of the rate of flow v is ascertainable by means of calibration.

3. An assembly as claimed in claim 2, **characterized in that** in the microprocessor there is determinable the absolute conductivity G_{abs}, ascertainable in the time when the space in the line between the measuring points is completely filled with liquid, as well as a threshold value α*G_{abs} depending thereon, whereafter the size of the surface defined by the function G(t) defining the electric conductivity is calculable, insofar as the function values exceed the threshold value α*G_{abs,} whereby the difference G_{abs} - α*G_{abs} between the absolute conductivity G_{abs} and the threshold value α*G_{abs} is standardizable at a constant value, e.g. "1", said surface defining the value of the interval of time Δt.

4. An assembly as claimed in any one of the preceding claims, **characterized in that** the quantity meter is connected to a buffer reservoir, and there is provided a circulation line which, at one end, is connected to said buffer reservoir at the upper side thereof or near thereto and, at the other end, debouches into the discharge line of the quantity meter.

5. An assembly as claimed in claim 4, **characterized in that** the buffer reservoir is funnel-shaped in downward direction.

6. An assembly as claimed in claim 4 or 5, **characterized in that** the quantity meter is connected to the buffer reservoir through an angle between 20° and 50°.

7. An assembly as claimed in claim 4, 5 or 6, **characterized in that** in the microprocessor the rate of flow of the liquid is determinable by adjusting a constant value, obtained by means of calibration, by a factor depending on the quantity of liquid to flow through, which quantity of liquid is present in the buffer reservoir, and the angle through which the quantity meter is connected to the buffer reservoir, which factor is obtained, by means of calibration, for a number of quantity values in the buffer reservoir and for a determined angle value.

8. An assembly as claimed in any one of the preceding claims, **characterized in that** the line comprises a narrowing, and the electrically conductive elements are disposed in this narrowing.

9. An assembly as claimed in any one of the preceding claims, **characterized in that,** when the flow of liquid flows pulsationwise through the line, in the microprocessor the quantity V of each of these pulsations is determinable and on the basis thereof, by summation, the total quantity Vₜₒₜ.

10. An implement for milking animals, such as cows, which implement comprises an assembly as claimed in any one of the preceding claims.

11. An implement as claimed in claim 10, **characterized in that** said implement comprises teat cups capable of being connected to the teats of animals to be milked and a milk tank for collecting the milk obtained via the teat cups, whereby the line of the assembly is connected between one or more teat cups and the milk tank and whereby in the line there is included a buffer reservoir to which the quantity meter of the assembly as claimed in any one of claims 1 to 10 is connected, while there is furthermore provided a circulation line which, at one end, is connected to said buffer reservoir at the upper side thereof or near thereto and, at the other end, debouches into the discharge line of the quantity meter.

12. An implement as claimed in claim 10 or 11, **characterized in that** there is provided a milking robot for automatically cleaning the teats, automatically connecting the teat cups to these teats, automatically milking the animal and automatically disconnecting the teat cups from the teats.

## Patentansprüche

1. Anordnung mit einer Leitung und einem Mengenmesser zur Ermittlung der durch die Leitung fließenden Flüssigkeitsmenge, wobei der Mengenmesser zwei elektrisch leitende Elemente umfaßt, die in der Leitung in einem festgelegten Meßabstand voneinander angeordnet und mit einem elektronischen Schaltkreis verbunden sind, wobei der Durchmesser der Leitung zumindest über die Länge des Meßabstandes so gewählt ist, daß während des Durchfließens der Flüssigkeit das Volumen der Leitung über die Länge des Meßabstandes für einige Zeit ganz ausgefüllt ist, und wobei ferner in dem elektronischen Schaltkreis die Menge V an durchgeflossener Flüssigkeit auf der Basis der elektrischen Leitfähigkeit G(t) der darin gemessenen Flüssigkeit, von Größenparametern des Mengenmessers und der Durchflußgeschwindigkeit v der Flüssigkeit feststellbar ist,
**dadurch gekennzeichnet, daß** jedes der elektrisch leitenden Elemente durch ein rohrförmiges Element gebildet ist, wobei die beiden rohrförmigen Elemente in einem festgelegten Abstand 1 zueinander durch ein weiteres rohrförmiges Element gehalten werden, das aus einem elektrisch nichtleitenden Material hergestellt ist und einen Innendurchmesser aufweist, der dem der angrenzenden Teile der beiden elektrisch leitenden, rohrförmigen Elemente entspricht.

2. Anordnung nach Anspruch 1,
**dadurch gekennzeichnet, daß** der elektronische Schaltkreis einen Mikroprozessor umfaßt, in welchem die Länge des Zeitraumes Δt, während dessen eine zu messende Flüssigkeitsmenge durch die Leitung geflossen ist, zumindest annähernd auf der Basis der elektrischen Leitfähigkeit G(t) bestimmbar ist, und in welchem die Menge V an durchgeflossener Flüssigkeit zumindest annähernd durch die Gleichung V = a*v*Δt bestimmbar ist, wobei a die Größe der Oberfläche des Querschnittes der Leitung zwischen den elektrisch leitenden Elementen repräsentiert und der Wert der Durchflußgeschwindigkeit v durch Eichung ermittelbar ist.

3. Anordnung nach Anspruch 2,
**dadurch gekennzeichnet, daß** in dem Mikroprozessor die absolute Leitfähigkeit G_{abs} bestimmbar ist, ermittelbar in der Zeit, in der der Raum in der Leitung zwischen den Meßpunkten ganz mit Flüssigkeit gefüllt ist, sowie ein davon abhängiger Grenzwert α*G_{abs}, worauf die durch die Funktion G(t) für die elektrische Leitfähigkeit definierte Größe der Oberfläche berechenbar ist, soweit die Funktionswerte den Grenzwert α*G_{abs} überschreiten, wobei die Differenz G_{abs} - α*G_{abs} zwischen der absoluten Leitfähigkeit G_{abs} und dem Grenzwert α*G_{abs} auf einen konstanten Wert, wie z. B. 1, standardisierbar ist, wobei die Oberfläche den Wert des Zeitraumes Δt definiert.

4. Anordnung nach einem der vorhergehenden Ansprüche,
**dadurch gekennzeichnet, daß** der Mengenmesser mit einem Pufferbehälter verbunden ist, und daß eine Umlaufleitung vorgesehen ist, die an einem Ende mit dem Pufferbehälter an oder nahe dessen Oberseite verbunden ist und am anderen Ende in die Abflußleitung des Mengenmessers mündet.

5. Anordnung nach Anspruch 4,
**dadurch gekennzeichnet, daß** der Pufferbehälter nach unten trichterförmig ausgebildet ist.

6. Anordnung nach Anspruch 4 oder 5,
**dadurch gekennzeichnet, daß** der Mengenmesser in einem Winkel von 20° bis 50° mit dem Pufferbehälter verbunden ist.

7. Anordnung nach Anspruch 4, 5 oder 6,
**dadurch gekennzeichnet, daß** in dem Mikroprozessor die Durchflußgeschwindigkeit der Flüssigkeit bestimmbar ist durch Einstellen eines konstanten, durch Eichung erzielten Wertes, durch einen Faktor, der von der im Pufferbehälter befindlichen, durchzulaufenden Flüssigkeitsmenge abhängt, und durch den Winkel, in dem der Mengenmesser mit dem Pufferbehälter verbunden ist, wobei der Faktor mittels Eichung für eine Anzahl von Mengenwerten im dem Pufferbehälter und für einen bestimmten Winkelwert ermittelt wird.

8. Anordnung nach einem der vorhergehenden Ansprüche,
**dadurch gekennzeichnet, daß** die Leitung eine Verengung aufweist, und daß die elektrisch leitenden Elemente in dieser Verengung angeordnet sind.

9. Anordnung nach einem der vorhergehenden Ansprüche,
**dadurch gekennzeichnet, daß** beim pulsierenden Fließen des Flüssigkeitsstromes durch die Leitung in dem Mikroprozessor die Menge V jeder dieser Pulsationen bestimmbar ist und basierend darauf durch Summierung die Gesamtmenge Vₜₒₜ.

10. Vorrichtung zum Melken von Tieren, wie z. B. Kühen, wobei die Vorrichtung eine Anordnung nach einem der vorhergehenden Ansprüche umfaßt.

11. Vorrichtung nach Anspruch 10,
**dadurch gekennzeichnet, daß** die Vorrichtung Zitzenbecher umfaßt, die an die Zitzen von zu melkenden Tieren anschließbar sind, sowie einen Milchtank zur Aufnahme der über die Zitzenbecher gewonnenen Milch, wobei die Leitung der Anordnung zwischen einem oder mehreren Zitzenbechern und dem Milchtank angeordnet ist, und wobei in der Leitung ein Pufferbehälter angeordnet ist, an den der Mengenmesser der Anordnung nach einem der Ansprüche 1 bis 10 angeschlossen ist, wobei ferner eine Umlaufleitung vorgesehen ist, die an einem Ende mit dem Pufferbehälter an oder nahe dessen Oberseite verbunden ist und am anderen Ende in die Abflußleitung des Mengenmessers mündet.

12. Vorrichtung nach Anspruch 10 oder 11,
**dadurch gekennzeichnet, daß** ein Melkroboter zum automatischen Reinigen der Zitzen, automatischen Anschließen der Zitzenbecher an diese Zitzen, automatischen Melken des Tieres und automatischen Abnehmen der Zitzenbecher von den Zitzen vorhanden ist.

## Revendications

1. Ensemble constitué d'un conduit et d'un volucompteur destiné à déterminer la quantité de liquide s'écoulant à travers le conduit, ledit volucompteur comprenant deux éléments conducteurs électriquement, prévus dans le conduit à une distance de mesure fixe l'un de l'autre, qui sont reliés à un circuit électronique, moyennant quoi le diamètre du conduit, au moins à travers la distance de mesure, est tel que pendant l'écoulement du liquide, le volume du conduit à travers la distance de mesure est complètement rempli pendant quelque temps et moyennant quoi en outre dans le circuit électronique la quantité v de liquide écoulé peut être déterminée sur la base de la conductivité électrique G(t) du liquide mesuré à l'intérieur, des paramètres de dimensionnement du volucompteur et de la vitesse d'écoulement v du liquide, **caractérisé en ce que** chacun des éléments conducteurs électriquement est constitué d'un élément en forme de tube, lesquels éléments en forme de tube sont à la fois conservés à une distance mutuelle fixe 1 l'un de l'autre au moyen d'un autre élément en forme de tube composé d'un matériau non conducteur électriquement et présentant un diamètre intérieur qui est égal à celui des parties adjacentes des deux éléments conducteurs électriquement en forme de tube.

2. Ensemble selon la revendication 1, **caractérisé en ce que** le circuit électronique comprend un microprocesseur, dans lequel la longueur de l'intervalle de temps Δt, pendant lequel une quantité de liquide devant être mesurée s'est écoulée à travers le conduit, est au moins approximativement déterminable sur la base de la conductivité électrique G(t) et dans lequel la quantité v de liquide écoulé est au moins approximativement déterminable par la relation V = a*v*Δt, où a représente la taille de la surface de la coupe transversale du conduit entre les éléments conducteurs électriquement et la valeur de la vitesse d'écoulement v est identifiable au moyen d'un étalonnage.

3. Ensemble selon la revendication 2, **caractérisé en ce que** dans le microprocesseur est déterminable la conductivité absolue G_{abs}, identifiable dans le temps quand l'espace dans le conduit entre les points de mesure est complètement rempli de liquide, de même qu'une valeur seuil α*G_{abs} dépendant de celle-ci, après quoi la taille de la surface définie par la fonction G(t) définissant la conductivité électrique peut être calculée, dans la mesure où les valeurs de fonction dépassent la valeur seuil α*G_{abs}, moyennant quoi la différence G_{abs} - α*G_{abs} entre la conductivité absolue G_{abs} et la valeur seuil α*G_{abs} peut être normalisée à une valeur constante, par exemple « 1 », ladite surface définissant la valeur de l'intervalle de temps Δt.

4. Ensemble selon l'une quelconque des revendications précédentes, **caractérisé en ce que** le volucompteur est relié à un réservoir tampon et il est prévu un conduit de circulation qui, au niveau d'une extrémité, est relié audit réservoir tampon au niveau du côté supérieur de celui-ci ou à proximité de celui-ci et, au niveau de l'autre extrémité, débouche dans le conduit d'évacuation du volucompteur.

5. Ensemble selon la revendication 4, **caractérisé en ce que** le réservoir tampon revêt une forme d'entonnoir dans la direction descendante.

6. Ensemble selon la revendication 4 ou 5, **caractérisé en ce que** le volucompteur est relié au réservoir tampon à travers un angle entre 20° et 50°.

7. Ensemble selon la revendication 4, 5 ou 6, **caractérisé en ce que** dans le microprocesseur la vitesse d'écoulement du liquide peut être déterminée en réglant une valeur constante, obtenue au moyen d'un étalonnage, par un facteur dépendant de la quantité de liquide devant s'écouler, laquelle quantité de liquide est présente dans le réservoir tampon et l'angle à travers lequel le volucompteur est relié au réservoir tampon, lequel facteur est obtenu, au moyen d'un étalonnage, pour un nombre de valeurs quantitatives dans le réservoir tampon et pour une valeur d'angle déterminée.

8. Ensemble selon l'une quelconque des revendications précédentes, **caractérisé en ce que** le conduit comprend un rétrécissement et les éléments conducteurs électriquement sont disposés dans ce rétrécissement.

9. Ensemble selon l'une quelconque des revendications précédentes, **caractérisé en ce que**, quand l'écoulement de liquide s'écoule dans le sens des pulsations à travers le conduit, dans le microprocesseur la quantité v de chacune de ces pulsations peut être déterminée et, sur cette base, par addition, la quantité totale Vₜₒₜ.

10. Dispositif pour traire des animaux, tels que des vaches, lequel dispositif comprend un ensemble selon l'une quelconque des revendications précédentes.

11. Dispositif selon la revendication 10, **caractérisé en ce que** ledit dispositif comprend des gobelets trayeurs capables d'être reliés aux trayons des animaux devant être traits et un réservoir à lait destiné à collecter le lait obtenu par l'intermédiaire des gobelets trayeurs, moyennant quoi le conduit de l'ensemble est relié entre un ou plusieurs gobelets trayeurs et le réservoir à lait et moyennant quoi dans le conduit il est inclus un réservoir tampon auquel le volucompteur de l'ensemble selon l'une quelconque des revendications 1 à 10 est relié, alors qu'il est en outre prévu un conduit de circulation qui, au niveau d'une extrémité, est relié audit réservoir tampon au niveau du côté supérieur de celui-ci ou à proximité de celui-ci et, au niveau de l'autre extrémité, débouche dans le conduit d'évacuation du volucompteur.

12. Dispositif selon la revendication 10 ou 11, **caractérisé en ce qu'**il est prévu un robot de traite destiné à nettoyer automatiquement les trayons, relier automatiquement les gobelets trayeurs à ces trayons, traire automatiquement l'animal et déconnecter automatiquement les gobelets trayeurs des trayons.
